# EUROPEAN PATENT APPLICATION

(11) **EP 3 828 056 A1**
(43) Date of publication of application: **02.06.2021**
(21) Application number: 20173943.0
(22) Date of filing: 11.05.2020
(51) Int. Cl.: B62B 7/08

(54) **BABY STROLLER FOLDING AND STANDING DEVICE**

(30) Priority: 27.11.2019 CN 201922084188 U
(71) Applicant: Yojin Industrial Corp., Chia i Hsien (TW)
(72) Inventor: HUNG, SHENG-PO, CHIA I HSIEN (TW); LIN, PING-CHING, CHIA I HSIEN (TW); KUO, CHING-HSING, CHIA I HSIEN (TW)
(74) Representative: Hellmich, Wolfgang

(57) **Abstract**

A baby stroller with a folding and standing device comprises front (1) and rear (2) wheel frames having wheels (10, 20) and a handlebar frame (3), which are respectively and pivotally connected on the top ends. The front wheel frame is pivotally connected with a supporting pole (5) that is maintained in a state to elastically pop out. A limiting portion (4) is configured on the rear wheel frame. When the front wheel frame (1) is stretched out, the limiting portion (4) can pull the supporting pole (5) and force it to fold inward. When the front wheel frame and the handlebar frame are folded and moving toward the rear wheel frame, the limiting portion (4) will release its force pulling the supporting pole tightly, so that, along with the movement of the front wheel frame toward the rear wheel frame, the supporting pole will pop out under the elastic force and be fixed. The supporting pole (5) and the rear wheels (20) form a stable support for the folded baby stroller to stand on the ground.

## Description

The present invention relates generally to a baby stroller folding and standing device, and more particularly to an innovative structure that enables standing of the baby stroller after folding. When the front wheel frame and the rear wheel frame are relatively folded inward, a supporting pole pivotally configured on the front wheel frame, originally folded inward, will pop out to raise the front wheels, so that they can be supported on the ground together with the rear wheels.

In general, commonly seen baby strollers can be folded to reduce volume and save space for storage. It is preferable if the baby stroller can stand on the ground after folding. Such preferable designs are disclosed in Patents CN201120421671, CN201110075757, CN201120111208, CN201110228886, CN200320120890, CN200520110313 etc, in which, the rear wheel frame is raised together with the rear wheels, and a supporting pole located below the wheel frame is used to stand on the ground together with the front wheels. In this way, the baby stroller can stand on the ground after folding. However, when the rear wheels are raised, the center of gravity of the whole stroller frame becomes unstable and the stroller can easily fall over. In addition, although the volume is reduced after folding, the overall length becomes larger after folding, causing inconvenience when the stroller is put away.

Another example is Patent CN201520207188, in which, between the foldable front and rear wheel frames, there is a foldable standing device, which can be folded and supported on the ground. After folding the front and rear wheel frames, the folding point between the first vertical pole and the second vertical pole is supported on the ground. Together with the rear wheels, front and rear supports are formed so that the baby stroller can stand on the ground. In order to realize easy and smooth operation in folding and unfolding, such a folding and standing structure naturally requires many design considerations and components. Therefore, production and assembly are quite complicated and time-consuming.

In view of the complexity of production and assembly caused by the structure of the above-said existing baby stroller folding and standing device, the present invention aims to provide a supporting pole, to be installed on the front wheel frame of a baby stroller. The supporting pole can automatically pop out. When the front and rear wheel frame is opened, the limiting portion fixed on the rear wheel frame will pull the supporting pole and fold it under the stroller, whereas, when the stroller is folded and the front and rear wheel frame are closed, the limiting portion will automatically release the supporting pole, and the supporting pole will immediately pop out. Together with the rear wheel, a support is formed for the folded baby stroller to stand on the ground.

Below is a description of the technical solution adopted by the present invention:
A baby stroller folding and standing device, having the following features: the top end of the rear wheel frame with rear wheels is pivotally connected with a front wheel frame and a handlebar frame, which can be folded together. The front wheel frame is pivotally connected with a supporting pole in a popping-out state. The rear wheel frame is fitted with a band-shaped limiting portion. When the front wheel frame is stretched out, the limiting portion will pull the supporting pole and fold the supporting pole inward.

The front end of the limiting portion is configured with an extension connector. The extension connector is fixed on the front wheel frame. When the front wheel frame and the rear wheel frame are opened, the limiting portion is pushed to a straight state. The front end of the limiting portion is extended and configured with a pulling end to pull the supporting pole inward.

Between the front wheel frame and the rear wheel frame, a cloth or mesh fabric basket is configured. The limiting portion is part of the bottom portion of the basket.

Thus, through configurations of a supporting pole pivotally connected to the front wheel frame of the baby stroller, which will pop out to form a fixation, and a limiting portion fixed on the rear wheel frame to pull the supporting pole, when the front wheel frame is folded toward the rear wheel frame, the limiting portion is released from a tightly pulling state, and the supporting pole will automatically turn and stretch outward. Together with the rear wheels, a stable support is formed for the folded baby stroller to stand on the ground. Meanwhile, the baby stroller can be folded and unfolded smoothly just with a simple structural design of the supporting pole and the limiting portion.
Fig.1 is a perspective view of the present invention.

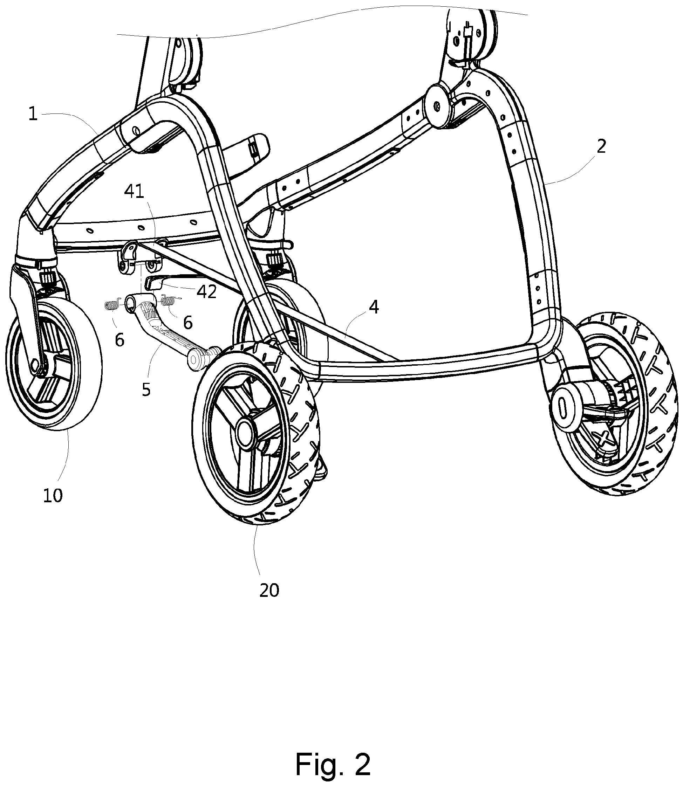

Fig.2 is an exploded view of the folding and standing device of the present invention.
Fig.3 is a schematic view of the supporting pole folded inward when the baby stroller is opened.
Fig.4 is a schematic view of the supporting pole stretching out when the baby stroller is folded.
Fig.5 is a schematic view of the baby stroller standing on the ground through the support of the supporting pole and the rear wheels when it is completely folded.

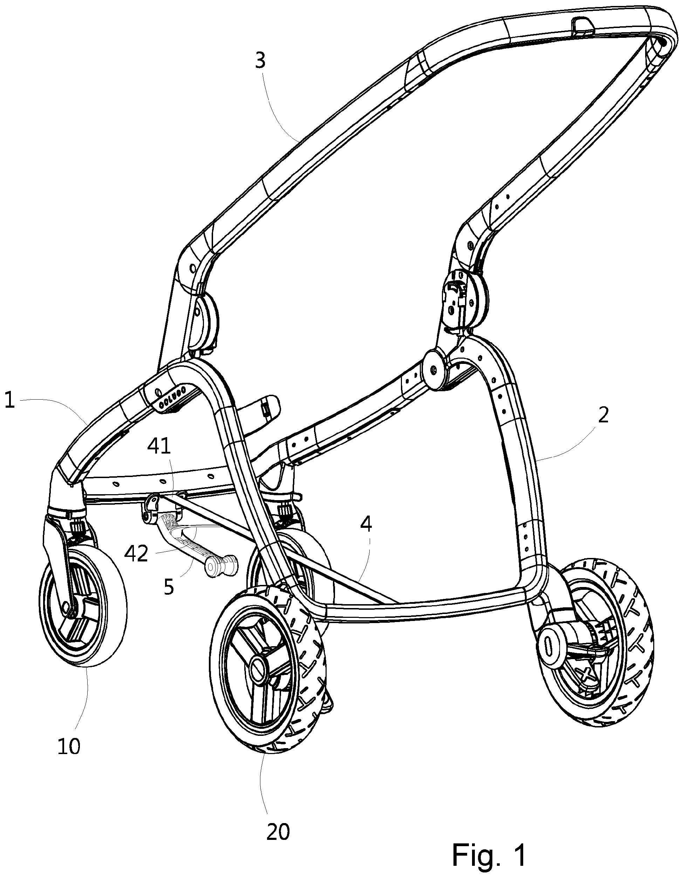

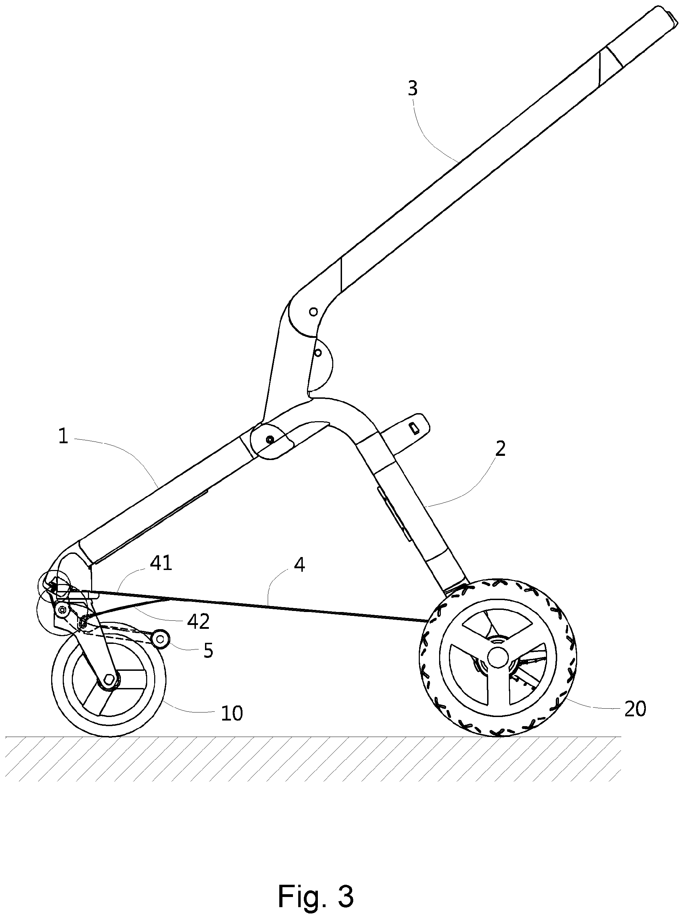

The structure of the baby stroller folding and standing device of the present invention is disclosed in Fig.1∼ Fig.3. A front wheel frame 1 installed with front wheels 10 and a handlebar frame 3 are pivotally connected respectively on the front side and top side of the top end of the rear wheel frame 2 installed with rear wheels 20, so that the front wheel frame 1 and the handlebar frame 3 can be turned toward the rear wheel frame 2 with the pivoting point as the center and be folded.

Further, the front end of the front wheel frame 1 is pivotally connected with a supporting pole 5 that can be turned forward or backward. At the pivoting point, and between the supporting pole 5 and the front wheel frame 1, a torsion spring 6 is installed. Through the torsion spring 6, the supporting pole 5 will maintain a state to turn and pop out. When the supporting pole 5 is turned outward, its top surface will be supported on the front wheel frame 1 and be fixed; on the contrary, whenever a force is applied to push or pull the supporting pole 5 inward, the supporting pole 5 will be folded inward.

Further, a soft and band-shaped limiting portion 4 is configured. The rear end of the limiting portion 4 is fixed on the rear wheel frame 2. Its front end is a pulling end 41 and is linked on the supporting pole 5. When the front wheel frame 1 and the rear wheel frame 2 of the baby stroller is completely unfolded, the limiting portion 4 will apply a force to pull the supporting pole 5 tightly inward, so that the supporting pole 5 will turn inward and be folded.

Further, said limiting portion 4 can be configured with an extension connector 42. The extension connector 42 is fixed on the front wheel frame 1, so that the top side of the limiting portion 4 is kept in a straight state. The pulling end 41 pulls the supporting pole 5 downward with an inclination. Between the front and rear wheel frames 1, 2, normally a cloth or mesh fabric basket is configured, and the limiting portion 4 can be part of the bottom portion of the basket. When the front wheel frame 1 and the rear wheel frame 2 are completely unfolded, the bottom of the basket will be stretched out. Similarly, through the pulling end 41 of the limiting portion 4, the supporting pole 5 is pulled and folded inward.

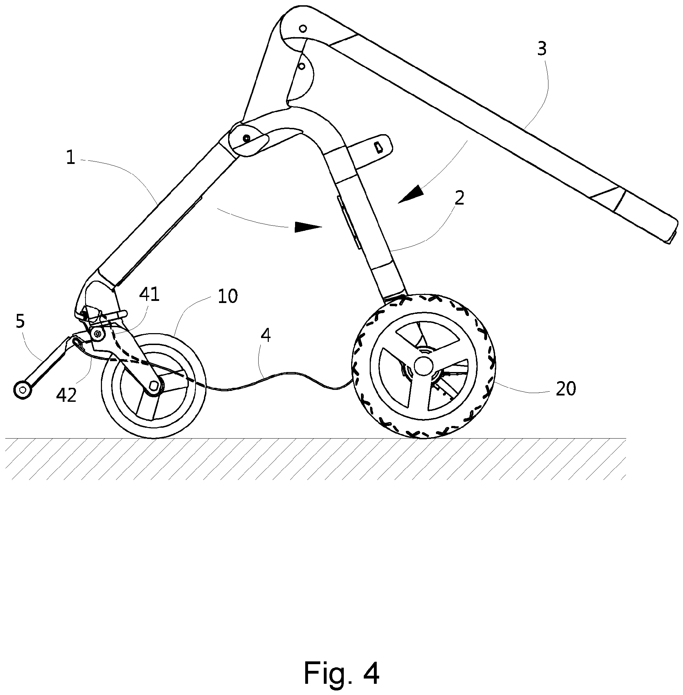

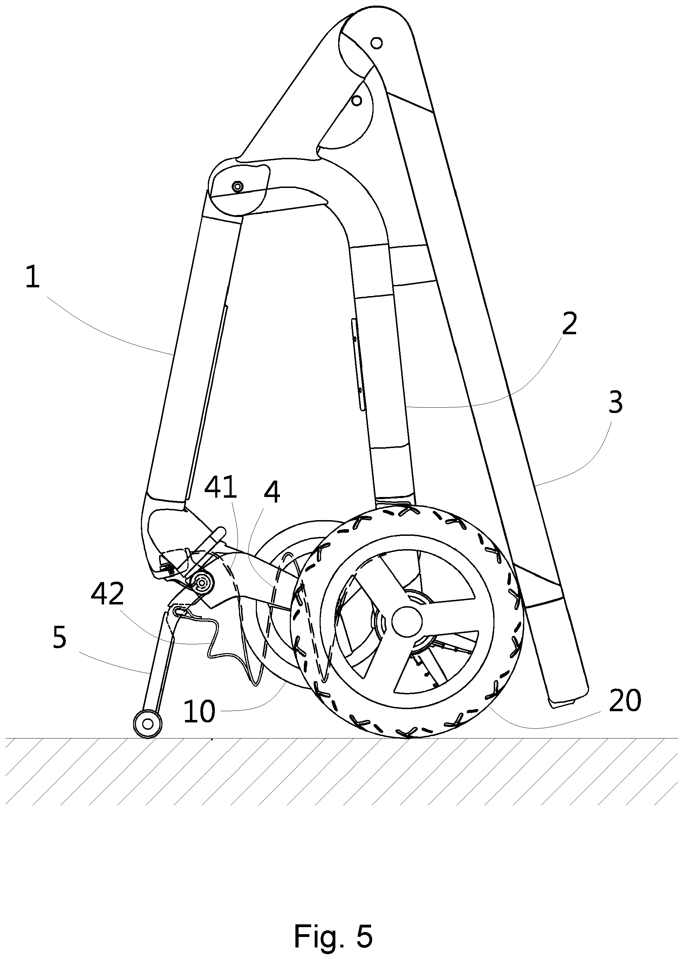

Further referring to Fig.4 and Fig.5, when the front wheel frame 1 and the handlebar frame 3 are folded and moving close to the rear wheel frame 2, the originally tightly pulled and straight limiting portion 4 is released, and the pulling end 41 loses its force pulling the supporting pole 5 tightly, the supporting pole 5 will pop and stretch out under the force of the torsion spring 6. As a result, through the supporting pole 5 and the rear wheels 20 installed on the rear wheel frame 2, a support is formed for the folded baby stroller to stand on the ground.

Thus, just through the supporting pole 5 that naturally stretches out under an elastic force, and a simple pulling component on the limiting portion 4, the baby stroller can be folded and stand on the ground. Meanwhile, through the above simple design, the baby stroller can be folded and unfolded more smoothly.

## Claims

1. A baby stroller folding and standing device, having the following characteristics: the top end of a rear wheel frame (2) installed with rear wheels (20) are pivotally connected with a front wheel frame (1) installed with front wheels (10) and a handlebar frame (3), both of which can be folded; the front wheel frame (1) is pivotally connected with a supporting pole (5) that is maintained in a state to elastically pop out; the rear wheel frame (2) is fixed with a band-shaped limiting portion (4); when the front wheel frame (1) stretches out, the limiting portion (4) will pull the supporting pole (5), forcing the supporting pole (5) to fold inward.

2. The baby stroller folding and standing device defined in claim 1, having the following characteristics: the front end of the limiting portion (4) is extended and configured with an extension connector (42); the extension connector (42) is fixed on the front wheel frame (1); when the front wheel frame (1) and the rear wheel frame (2) are opened, the limiting portion (4) is pushed to a straight state; the front end of the limiting portion (4) is further extended and configured with a pulling end (41) that pulls the supporting pole (5) inward.

3. The baby stroller folding and standing device defined in claims 1 or 2, having the following characteristics: between the front wheel frame (1) and the rear wheel frame (2), a cloth or mesh fabric basket is configured, and the limiting portion (4) is part of the bottom portion of the basket.
